# EUROPEAN PATENT SPECIFICATION

(11) **EP 4 151 521 B1**
(45) Date of publication and mention of the grant of the patent: **05.06.2024**
(21) Application number: 21400021.8
(22) Date of filing: 15.09.2021
(51) Int. Cl.: B64C 3/18, B64C 1/26, B64C 29/00, B64C 39/04

(54) **AN AIRCRAFT WITH A FORWARD-SWEPT WING IN SHOULDER-WING CONFIGURATION**
FLUGZEUG MIT EINEM NACH VORNE GEPFEILTEN FLÜGEL IN SCHULTER-FLÜGELKONFIGURATION
AÉRONEF AYANT UNE AILE EN FLÈCHE AVANT EN CONFIGURATION D'AILE D'ÉPAULE

(43) Date of publication of application: 22.03.2023
(73) Proprietor: Airbus Urban Mobility GmbH, 80333 Munich (DE)
(72) Inventor: Fink, Axel, D-86609 DONAUWÖRTH (DE); Ernst, Gerald, D-86609 DONAUWÖRTH (DE); Ehrhardt, Thomas, D-81245 MUNICH (DE)
(74) Representative: Pouillot, Laurent Pierre Paul

(56) References cited:
- JP-A- H05 286 496
- US-A- 3 018 985
- US-B1- 10 377 488

## Description

The present invention is related to an aircraft comprising a fuselage and a forward-swept wing in shoulder-wing configuration.

Usually, winged aircrafts that are adapted for forward flight with low cruise speeds are embodied with subsonic wings having comparatively large thickness profiles and large wing surfaces in order to achieve adequate lifting capabilities. Such subsonic wings are basically constructed by using one of two different types of configurations: the mass boom type and the box beam type.

Subsonic wings of the mass boom type have several discrete spars with flanges that are designed to carry normal loads resulting from wing bending, whilst respective covering skins are designed to carry shear loads resulting from wing torsion. Accordingly, the mass boom type is mainly used with comparatively slow aircrafts with rather thick wings and small wing loadings. It stands out by its simplicity, tailorability and insensitivity to cut-outs.

Furthermore, subsonic wings of the mass boom type in single spar construction may be used with recent low-speed aircrafts, such as small regional aircrafts and sailplanes. In the single spar construction, a single spar is used and continued within a given fuselage and incorporates required main attachment points to the fuselage. The single spar is frequently straight covering a respective highest thickness of an associated wing profile, or kinked at its root, i. e. its intersection to the fuselage, requiring the interconnection to a strong root rib to compensate the kink and an associated normal load deviation.

The document US 2,329,814 describes an aircraft which is embodied as an airplane with a fuselage and a wing in single spar construction. The wing is a forward-swept wing which is allocated at a mid-position of the fuselage.

In contrast thereto, subsonic wings of the box beam type have comparatively strong wing covers which are designed as distributed flanges, hence, reacting to both normal loads from bending and shear loads from torsion. Recent wing constructions using sandwich shell designs tend to be of the box beam type as a result of respective particular stiffness and strength characteristics of sandwich shell constructions.

These wings may be formed with a respective load carrying section that forms a wing box which is conventionally delimited by front and rear spars, as well as upper and lower wing cover shells. Such a wing box is usually continued within a respective fuselage perimeter of a given aircraft, hence, interconnecting corresponding portside and starboard side wing sections, thereby providing for a mutual wing section interconnection and undisturbed normal load continuity. The continuation of the wing box within the fuselage perimeter is referred to as center wing box.

The center wing box may be allocated at different height positions within the fuselage perimeter, which depend on a respectively selected wing allocation. More specifically, the wing allocation with respect to a given fuselage may correspond to a low, mid or high position. In the high position a respective wing may interpenetrate the fuselage at its uppermost region or it may be superposed on top of the continuously formed fuselage. The former positioning is usually referred to as "shoulder-wing configuration", the latter as "high-wing configuration". The high-wing configuration does not reduce a respectively available useful volume inside the fuselage, but increases a respective total height and wetted area of the given aircraft, hence, leading to a disadvantageous increase in terms of drag and structural weight, resulting in a need of large fillet fairings. The shoulder-wing configuration does not have these drawbacks, but shows an important negative impact on a respectively available useful volume inside the fuselage, especially when constructing a respective wing with a center wing box.

More specifically, the center wing box significantly reduces a respectively available useful volume inside the fuselage, which is especially the case for a wing with shoulder-wing configuration, in which the center wing box is arranged within an upper perimeter of the fuselage. This drawback is even more pronounced for thick wing profiles, as required for low-speed aircrafts.

Nevertheless, a respective inner volume of the center wing box cannot be used efficiently for accommodating e. g. aircraft systems, such as for instance batteries in the case of an e-VTOL, since several cut-outs are required for access with respect to installation, maintenance, and/or inspection. Providing such cut-outs in the center wing box would, however, jeopardize a required structural function and efficiency of an underlying structure of the center wing box.

The center wing box may, however, be eliminated by using alternative designs of truss-braced wings. However, such an alternative design requires additional truss members and, therefore, mass and drag of a respective wing will increase.

As a result, the reduction of the available useful volume inside the fuselage, in particular by means of a respective center wing box of a given wing in shoulder-wing configuration, leads to a need of increasing an overall fuselage size if a particular inner volume must be provided for accommodation of aircraft systems and/or payload. Nevertheless, an increase of the overall fuselage size results in a disadvantageous increase of the fuselage's wetted area, structural mass, and aerodynamic drag.

Furthermore, if the given wing in shoulder-wing configuration is a swept wing of the box beam type, comparatively strong root ribs at the swept wing's roots are required for load redistribution at an associated kink between its wing box and center wing box, as well as by an overload of a given box skin and web within the shortest spar, which corresponds to a rear spar perimeter for rearward swept wings. Especially for sandwich constructions, these overloads lead to a considerable local thickening, hence, partially jeopardizing the structural effectiveness of the box beam type's concept.

The document JP H05 286496 A describes an aircraft with a fuselage that comprises a plurality of main frames to which a main wing is attached. The main wing is a forward-swept wing in shoulder-wing configuration, which is formed of left and right main wings. Respective base ends, i. e. fuselage mounting portions of the left and right main wings are attached to associated tops of the main frames. Each one of the left and right main wings includes two front and rear spar girders extending from its fuselage mounting portion to its wing tip, as well as a shorter rear girder. A plurality of ribs is connected between the two front spar girders and the two rear spar girders. The reaction force (kink load) of a torsional moment that greatly acts on a kink portion of the front and rear spar girders is effectively transmitted to a rib provided at the kink portion to increase the bending rigidity and the torsional rigidity.

The document US 3 018 895 A describes an aircraft with a fuselage and a rearward-swept wing that comprises an unswept main spar which functions as a main bending member of the rearward-swept wing when considered as a whole. The rearward-swept wing comprises swept front spars, and swept rear spars. The swept front spars may be secured by bolts or the like to appropriate fittings mounted on suitable bulkheads of the fuselage. The outboard ends of the unswept main spar are respectively secured to the swept front spars. Furthermore, the unswept main spar may be secured to respective inboard ends of the swept rear spars, approximately at the locations of associated root ribs.

Based on the limitations and drawbacks of the prior art, an object of the present invention is to provide a new aircraft comprising a fuselage and a forward-swept wing in shoulder-wing configuration which is configured to enable an increase of an available useful volume inside the fuselage.

This object is solved by an aircraft that comprises the features of claim 1. More specifically, according to the present invention an aircraft is provided that comprises a fuselage, and a forward-swept wing in shoulder-wing configuration with a center wing section that is formed in an upper portion of the fuselage and that interconnects a portside wing section and a starboard side wing section of the forward-swept wing. Each one of the portside and starboard side wing sections comprises a wing root that is connected to the fuselage, and a wing tip. The portside wing section comprises a portside longitudinal front spar and a portside longitudinal rear spar which extend from the wing root of the portside wing section to the wing tip of the portside wing section. The starboard side wing section comprises a starboard side longitudinal front spar and a starboard side longitudinal rear spar which extend from the wing root of the starboard side wing section to the wing tip of the starboard side wing section. The center wing section comprises a center wing spar that is attached to the portside longitudinal front spar, the portside longitudinal rear spar, the starboard side longitudinal front spar, and the starboard side longitudinal rear spar. The center wing spar comprises a center spar web with a lower cap and an upper flange.

More particularly, the present invention addresses a structural arrangement of a forward-swept wing in shoulder-wing configuration on an aircraft. In other words, according to the present invention the forward-swept wing is mounted to an upper section of the fuselage such that the forward-swept wing intersects an upper portion of a respective inner volume of the fuselage.

The structural arrangement of the forward-swept wing in shoulder-wing configuration according to the present invention is applicable to any aircraft that is embodied with a forward-swept wing in shoulder-wing configuration independent of a particular aircraft type. In other words, the structural arrangement of the forward-swept wing in shoulder-wing configuration according to the present invention is applicable to airplanes, compound helicopters, multicopters, and so on.

By way of example, the structural arrangement of the forward-swept wing in shoulder-wing configuration according to the present invention is suitable for use with electric Vertical Take-Off and Landing aircrafts (e-VTOLs). On that type of aircraft an underlying requirement of accommodation of bulky batteries within a given fuselage perimeter and a simultaneous need of highly optimized aerodynamic efficiency renders use of the structural arrangement of the forward-swept wing in shoulder-wing configuration according to the present invention particularly advantageous, as it enables at least a significant reduction of a maximum frontal cross-section of the fuselage by means of masking, as well as of a respective entire loft surface of a fuselage body of the fuselage for a given size of an associated power plant, i. e. batteries accommodated inside the fuselage.

More specifically, in e-VTOLs the structural arrangement of the forward-swept wing in shoulder-wing configuration according to the present invention is advantageous in terms of rotor ground clearance as well as ingress/egress ergonomics and visibility. Forward-swept wings enable an increased overall stability of a winged multi-rotor e-VTOL. In the context of the present invention, the term "forward-swept wing" refers to a wing having outboard tips allocated longitudinally ahead of respective wing root sections at their intersection to a given aircraft fuselage. The shoulder-wing configuration is advantageous in terms of achieving an at least significantly reduced total cross-section of the fuselage body.

In an exemplary realization, a given aircraft comprises a central fuselage body which is used to accommodate a given payload and/or aircraft system(s), such as a power plant with a set of batteries and further equipment. The central fuselage body preferably accommodates a cockpit compartment and a cabin or cargo compartment, which may e. g. be used as battery compartment. In the latter case, the cockpit compartment and the cabin or cargo compartment are preferentially segregated. The cockpit compartment is arranged in a front region of the fuselage and may accommodate the given payload, such as a pilot and/or passenger(s). The cabin or cargo compartment is arranged in a rear region of the fuselage and may accommodate e. g. power-plant related systems amongst others.

Advantageously, an inner volume of the central fuselage body can fully be used for integration of the power-plant related systems, such as e. g. batteries. In fact, an increase of the inner volume and, more particularly, of an available useful volume allows reducing the size, i. e. cross section and wetted surface, of the aircraft's fuselage, hence, reducing an underlying structural weight of the fuselage and a respectively associated aerodynamic drag.

The given aircraft further comprises a forward-swept wing in shoulder-wing configuration with an outer wing portion, and an inner fuselage portion. The former corresponds to a wing portion that extends from its root at a side of the fuselage to an associated wing tip, and is hereinafter also referred to as the "external wing portion". The latter corresponds to a wing portion that is located within a fuselage perimeter of the central fuselage body, and is hereinafter also referred to as the "inner wing portion".

An underlying wing structure of the external wing portion is preferably composed of an upper wing skin, a lower wing skin, a front spar, a rear spar, a set of ribs and a center spar. The center spar, which may also be referred to as the "center wing spar", preferentially extends from the inner wing portion into the external wing portion. A strong, massive center spar, arranged right behind the cockpit compartment, is considered advantageous in terms of crash behaviour and passenger protection, which is especially demanding for a shoulder-wing configuration.

The center spar may be connected to a fuselage front main frame. Advantageously, the frame's web and the center spar's web are interconnected by means of e. g. structural riveting. Hence, the design plane of the front main frame and the design plane of the center spar are essentially coincident. The assembly of the center spar and the front main frame provide for a suitable segregation, i. e. delimitation of the cockpit compartment from the cabin or cargo compartment.

Preferably, the center spar is straight and perpendicular to a longitudinal axis of the given aircraft, i. e. a longitudinal axis of the central fuselage body in forward flight direction of the given aircraft. Preferentially, the center spar comprises a strong, massive lower cap, a thin upper flange and a web. The upper flange may enable attachment of the web to the upper wing skin, which preferably acts as an upper distributed cap carrying upper bending normal loads. The lower cap preferentially acts as a concentrated mass cap carrying corresponding lower bending normal loads. By implementing the lower cap as a concentrated massive element, respectively used material in the forward-swept wing may be more efficiently exploited in terms of compressive strength compared to distributed sandwich shells, which is crucial for demanding emergency landing or crash load cases.

An overall assembly of the front and rear spar with the upper and lower wing skin of the external wing portion delimit a wing box within the external wing portion. Thus, the wing box is a closed box and defines a main load carrying structural perimeter of the external wing portion. The wing box may be closed at its root by a root rib, which provides for even continuity to respective side shells of the fuselage. Advantageously, the root ribs are integral parts of continuous fuselage side shells.

Preferably, the center spar covers an inboard portion of the wing box in the external wing portion as well as an associated center wing perimeter in the inner wing portion. Accordingly, the center spar has a fuselage portion and a wing portion and represents a main structural interconnection element between the external wing portion and the internal wing portion. This main structural interconnection element diagonally crosses the wing box of the inboard portion of the external wing portion as a result of the forward sweep of the forward-swept wing and is, preferably, attached to the front spar, the rear spar, as well as the upper and lower skins of the external wing portion.

The inner wing portion preferably comprises the center spar and the upper wing skin, which is preferentially a continuation of the upper wing skin of the external wing portion whilst simultaneously forming an uppermost loft surface of the fuselage, i. e. an upper fuselage loft. However, the wing box of the external wing portion is interrupted within a respective wing root perimeter at the fuselage and, more particularly, on the fuselage's side with no continuation of the lower wing skin within the inner wing portion inside the fuselage.

As a result, the center spar advantageously enables elimination of a need for continuing the lower wing skin within the fuselage, i. e. an inner fuselage perimeter, hence, allowing an efficient use of the entire inner fuselage perimeter. Furthermore, the center spar enables omission of closed structural volumes within the cabin or cargo compartment. In fact, a continuation of the wing box within the inner fuselage perimeter would result in a center wing box with a comparatively big internal closed volume with reduced accessibility and usability. If such a center wing box is implemented with cut-outs and access panels, this would jeopardize the structural function of the center wing box.

Preferably, the lower wing skin and the rear spar of the external wing portion are connected to a side shell of the fuselage along a given wing root intersection perimeter. This allows efficiently reacting to torsion shear flows of the wing box along its entire perimeter into the side shells of the fuselage.

In terms of structure mechanics, flapping wing bending moments of the external wing portion are preferably transferred by the center spar into the inner wing portion. A respective flapping wing bending load is, thus, self-equilibrated by the center spar within the inner wing portion. Torsion loads of the external wing portion are preferably absorbed by the side shells of the fuselage at the wing roots. A wing vertical load, i. e. lifting load of the external wing portion and rotors or wing inertia loads, are preferably transmitted by the front and rear spars to corresponding frames within the fuselage. Longitudinal loads and feathering moments are minor, but preferably transferred by the interconnection of the external wing portion to the side shells of the fuselage and self-equilibrated within the continuous upper wing skin within the inner wing portion respectively.

According to some aspects, the forward-swept wing comprises a leading edge and a trailing edge, wherein the portside longitudinal front spar and the starboard side longitudinal front spar are arranged close to the leading edge, and wherein the portside longitudinal rear spar and the starboard side longitudinal rear spar are arranged close to the trailing edge.

According to some aspects, the center wing spar comprises a portside outer tip and a starboard side outer tip, wherein the portside outer tip is attached to the portside longitudinal rear spar, and wherein the starboard side outer tip is attached to the starboard side longitudinal rear spar.

According to some aspects, the portside wing section comprises at least one portside transversal rib that forms a first portside intersection point with the portside longitudinal rear spar and the portside outer tip of the center wing spar, wherein the starboard side wing section comprises at least one starboard side transversal rib that forms a first starboard side intersection point with the starboard side longitudinal rear spar and the starboard side outer tip.

According to some aspects, the at least one portside transversal rib, the portside longitudinal rear spar and the portside outer tip of the center wing spar are attached to each other at the first portside intersection point, wherein the at least one starboard side transversal rib, the starboard side longitudinal rear spar and the starboard side outer tip are attached to each other at the first starboard side intersection point.

According to some aspects, the portside longitudinal front spar forms a second portside intersection point with the center wing spar at the wing root of the portside wing section, wherein the starboard side longitudinal front spar forms a second starboard side intersection point with the center wing spar at the wing root of the starboard side wing section.

According to some aspects, the portside longitudinal front spar and the center wing spar are attached to each other at the second portside intersection point, wherein the starboard side longitudinal front spar and the center wing spar are attached to each other at the second starboard side intersection point.

According to some aspects, the at least one portside transversal rib is oriented at least approximately perpendicular to one of the portside longitudinal rear spar and/or the portside longitudinal front spar, wherein the at least one starboard side transversal rib is oriented at least approximately perpendicular to one of the starboard side longitudinal rear spar and/or the starboard side longitudinal front spar.

According to some aspects, the center wing section comprises a center upper skin that is attached to the upper flange.

According to some aspects, the forward-swept wing comprises an upper skin and a lower skin, wherein the center upper skin is integrated into the upper skin and forms an upper fuselage loft, and wherein the lower skin is interrupted by the fuselage.

According to some aspects, the fuselage comprises a main frame that divides the fuselage into a front compartment and a rear compartment, wherein the center spar web is attached to the main frame.

According to some aspects, the main frame extends between the upper portion of the fuselage and a lower portion of the fuselage.

According to some aspects, the lower cap is formed as a massive component with concentrated mass and adapted to carry lower bending normal loads.

According to some aspects, the portside wing section comprises a portside root rib that is provided at the wing root of the portside wing section and attached to the portside longitudinal front spar, the center wing spar, and the fuselage, wherein the starboard side wing section comprises a starboard side root rib that is provided at the wing root of the starboard side wing section and attached to the starboard side longitudinal front spar, the center wing spar, and the fuselage.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a top view of an aircraft with a schematically illustrated fuselage and forward-swept wing in accordance with some embodiments,
- Figure 2 shows another top view of the aircraft of Figure 1,
- Figure 3 shows a schematic sectional view of the fuselage of Figure 1 and Figure 2, and
- Figure 4 shows a perspective view of the forward-swept wing of Figure 1 and Figure 2, seen from below, in accordance with some embodiments.

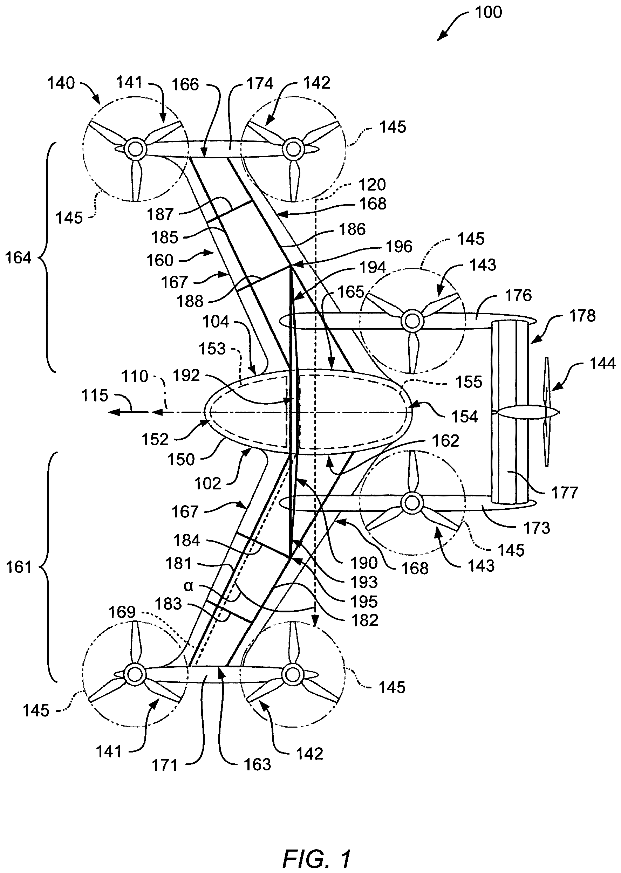

Figure 1 shows an aircraft 100 in an illustrative forward flight direction 115, with a fuselage 150 and a forward-swept wing 160. By way of example, the aircraft 100 is seen from above.

The fuselage 150 forms a portside wall 102 and a starboard side wall 104, and may be connected to any suitable undercarriage, such as e. g. a skid- or wheel-type landing gear. For purposes of illustration, the fuselage 150 and the forward-swept wing 160 are only shown schematically in order to clarify a preferred inner structural arrangement according to the present invention, as described below.

By way of example, the aircraft 100 is embodied as a multicopter with a thrust producing units assembly 140 that includes a plurality of thrust producing units 141, 142, 143, 144, each comprising associated rotor blades which define respective rotor discs 145 in rotation. In a preferred realization, the multicopter is an e-VTOL that is adapted for vertical take-off and landing, wherein the thrust producing units 141, 142, 143, 144 are electrically driven and adapted for producing lift and/or forward thrust in operation.

However, it should be noted that the present invention is not limited to multicopters and/or e-VTOLs and may instead be applied to any aircraft that comprises a forward-swept wing that may be embodied similar to the forward-swept wing 160. Accordingly, the present invention may e. g. be applied to airplanes, compound helicopters, drones and so on. Nevertheless, for simplicity and clarity of the following description, the aircraft 100 is hereinafter referred to as the "e-VTOL 100".

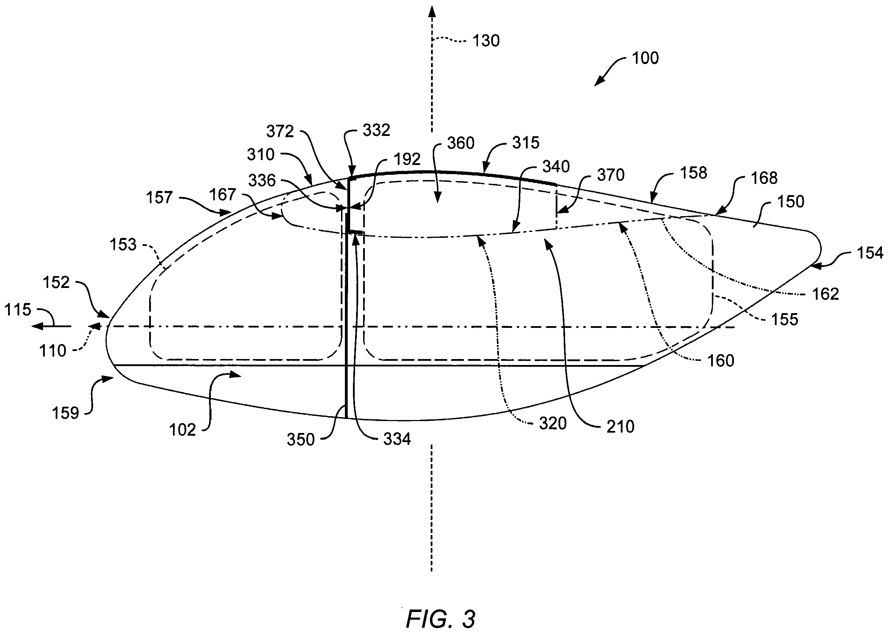

For purposes of illustration, the e-VTOL 100 is shown with three mutually orthogonal directions forming a three-dimensional frame of reference. A "length" direction 110 corresponds to a respective roll axis inherent to the e-VTOL 100, which is also referred to as "longitudinal axis 110" hereinafter. A "width" direction 120 is perpendicular to the longitudinal axis 110 and corresponds to a respective pitch axis of the e-VTOL 100. This width direction 120 is also referred to as "lateral axis 120" hereinafter. A "height" direction (130 in Figure 3) is perpendicular to the longitudinal axis 110 and the lateral axis 120 and corresponds to a respective yaw axis of the e-VTOL 100. This height direction (130 in Figure 3) is also referred to as "vertical axis 130" hereinafter.

The e-VTOL 100 may be adapted for transportation of passengers, at least for transportation of a pilot. Therefore, a front part 152 of the fuselage 150, which is also referred to as the "front fuselage 152", illustratively forms a cockpit compartment 153. A rear part 154 of the fuselage 150, which is also referred to as the "rear fuselage 154", illustratively forms a cabin compartment 155. Preferably, the cockpit compartment 153 is adapted for accommodation of passengers, including a pilot of the e-VTOL 100, while the cabin compartment 155 is adapted for accommodating a power plant and other aircraft systems, including e. g. batteries.

By way of example, the e-VTOL 100 comprises an empennage 178 that forms an aft region of the e-VTOL 100. The empennage 178 may be mounted to two lateral booms 173, 176 which are illustratively mounted to the forward-swept wing 160. The lateral booms 173, 176 extend from the forward-swept wing 160 in a direction that is opposed to the forward flight direction 115 and they are at least approximately arranged in parallel to the longitudinal axis 110. The empennage 178 illustratively comprises a horizontal rear plane 177 that interconnects the lateral booms 173, 176.

According to the present invention, the forward-swept wing 160 is mounted in shoulder-wing configuration to the fuselage 150. The forward-swept wing 160 has a leading edge 167 and a trailing edge 168, and comprises a portside wing section 161 and a starboard side wing section 164. Each one of the portside and starboard side wing sections 161, 164 comprises an associated wing root 162, 165 that is connected to the fuselage 150, and a wing tip 163, 166.

Each one of the portside and starboard side wing sections 161, 164 is illustratively connected at its wing tip 163, 166 to an associated outboard wing pod 171, 174. By way of example, each one of the outboard wing pods 171, 174 supports two non-tiltably mounted thrust producing units 141, 142 of the thrust producing units assembly 140. More specifically, the outboard wing pod 171 illustratively supports a first thrust producing unit 141 that is arranged near the leading edge 167 of the forward-swept wing 160 at the portside wing section 161, as well as a first thrust producing unit 142 that is arranged near the trailing edge 168 of the portside wing section 161. Likewise, the outboard wing pod 174 illustratively supports a second thrust producing unit 141 that is arranged near the leading edge 167 of the forward-swept wing 160 at the starboard side wing section 164, as well as a second thrust producing unit 142 that is arranged near the trailing edge 168 of the starboard side wing section 164. Furthermore, the lateral boom 173 illustratively supports a first thrust producing unit 143 that is arranged near the trailing edge 168 of the portside wing section 161, and the lateral boom 176 illustratively supports a second thrust producing unit 143 that is arranged near the trailing edge 168 of the starboard side wing section 164.

By way of example, the portside wing section 161 is shown with a quarter chord line 169 to further illustrate the forward sweep of the forward-swept wing 160. The quarter chord line 169 of the portside wing section 161, and similarly a respective quarter chord line of the starboard side wing section 164, is forwardly angled by a sweep angle α with respect to the lateral axis 120 of the e-VTOL 100. The sweep angle α is preferably selected from the range of 40° to 80° and defines the forward sweep of the forward-swept wing 160, which may be used advantageously to achieve flight stability.

Illustratively, the portside wing section 161 comprises a portside longitudinal front spar 181 and a portside longitudinal rear spar 182 which extend from the wing root 162 of the portside wing section 161 to the wing tip 163 of the portside wing section 161. Similarly, the starboard side wing section 164 comprises a starboard side longitudinal front spar 185 and a starboard side longitudinal rear spar 186 which extend from the wing root 165 of the starboard side wing section 164 to the wing tip 166 of the starboard side wing section 164. The portside longitudinal front spar 181 and the starboard side longitudinal front spar 185 are arranged close to the leading edge 167. The portside longitudinal rear spar 182 and the starboard side longitudinal rear spar 186 are arranged close to the trailing edge 168.

By way of example, the portside wing section 161 further comprises at least one and, illustratively, two portside transversal ribs 183, 184. Similarly, the starboard side wing section 164 comprises at least one and, illustratively, two starboard side transversal ribs 187, 188.

Preferably, at least one of the portside transversal ribs 183, 184 is oriented at least approximately perpendicular to one of the portside longitudinal rear spar 182 and/or the portside longitudinal front spar 181. Illustratively, both portside transversal ribs 183, 184 are oriented perpendicular to the portside longitudinal front spar 181. Similarly, at least one of the starboard side transversal ribs 187, 188 is preferably oriented at least approximately perpendicular to one of the starboard side longitudinal rear spar 186 and/or the starboard side longitudinal front spar 185. Illustratively, both starboard side transversal ribs 187, 188 are oriented perpendicular to the starboard side longitudinal front spar 185.

According to one aspect, the forward-swept wing 160 further comprises a center wing spar 190. The center wing spar 190 is attached to the portside longitudinal front spar 181, the portside longitudinal rear spar 182, the starboard side longitudinal front spar 185, and the starboard side longitudinal rear spar 186. Thus, the center wing spar 190 interconnects the portside wing section 161 and the starboard side wing section 164. Preferably, the center wing spar 190 is oriented perpendicular to the longitudinal axis 110.

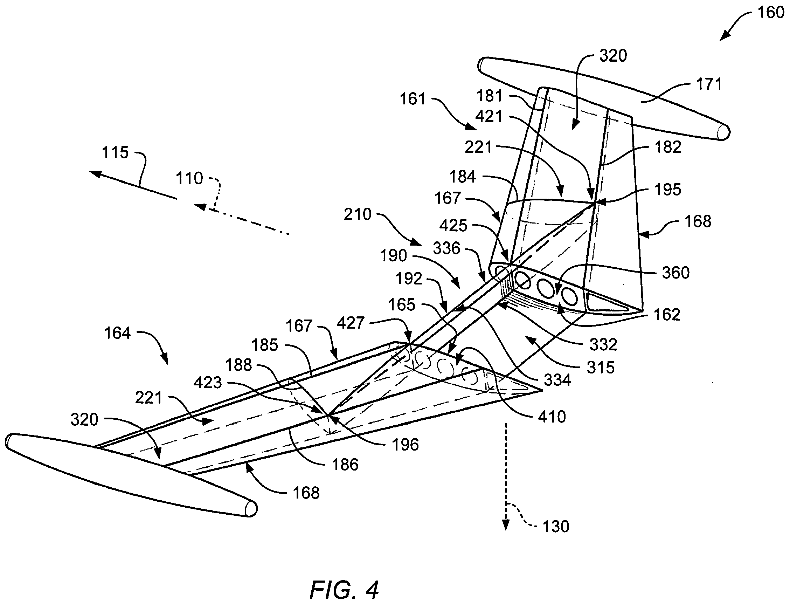

Illustratively, the center wing spar 190 has a center fuselage portion 192, as well as a portion 193 that extends from the center fuselage portion 192 into the portside wing section 161, and a portion 194 that extends from the center fuselage portion 192 into the starboard side wing section 164. The center wing spar 190 illustratively further comprises a portside outer tip 195 and a starboard side outer tip 196. The portside outer tip 195 is preferably attached to the portside longitudinal rear spar 182, and the starboard side outer tip 196 is preferably attached to the starboard side longitudinal rear spar 186. Attachment of the center wing spar 190 to the portside longitudinal front spar 181 and the starboard side longitudinal front spar 185 is further described below at Figure 4.

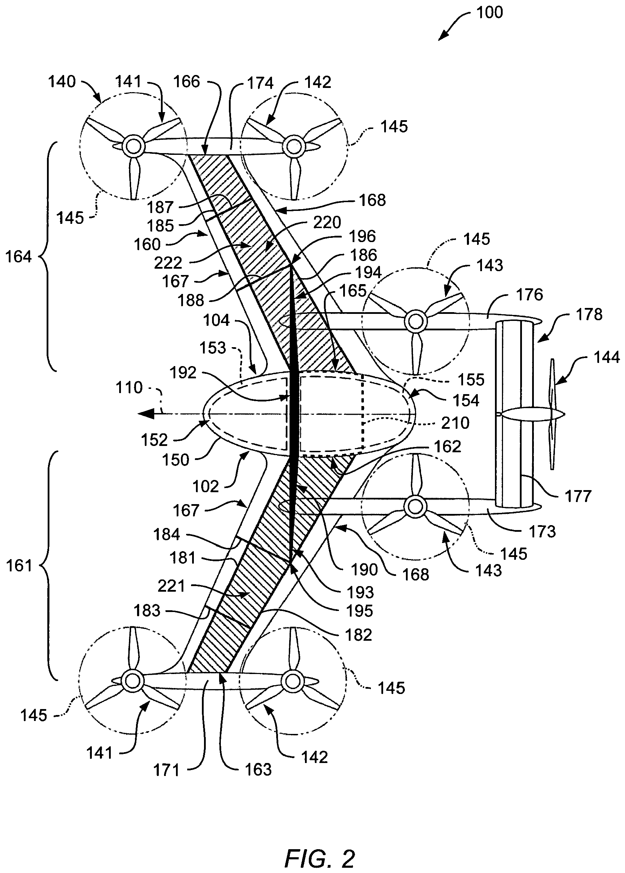

Figure 2 shows the e-VTOL 100 of Figure 1 with the fuselage 150 and the forward-swept wing 160 which is mounted in shoulder-wing configuration to the fuselage 150. As described above at Figure 1, the forward-swept wing 160 comprises the portside wing section 161 with the portside longitudinal front spar 181, the portside longitudinal rear spar 182, and the portside transversal ribs 183, 184, as well as the starboard side wing section 164 with the starboard side longitudinal front spar 185, the starboard side longitudinal rear spar 186, and the starboard side transversal ribs 187, 188. The forward-swept wing 160 further comprises the center wing spar 190 with the center fuselage portion 192, the portion 193 that extends from the center fuselage portion 192 into the portside wing section 161, and the portion 194 that extends from the center fuselage portion 192 into the starboard side wing section 164.

According to one aspect, the forward-swept wing 160 comprises a center wing section 210 that is allocated within the fuselage perimeter of the fuselage 150 and that interconnects the portside wing section 161 and the starboard side wing section 164. Preferably, the center wing section 210 is formed in an upper portion (157 in Figure 3) of the fuselage 150. The center wing section 210 illustratively comprises the center fuselage portion 192 of the center wing spar 190, which is preferentially located in a front region of the center wing section 210.

Preferably, the forward-swept wing 160 features a main structural perimeter in the form of a wing box 220. The wing box 220 is delimited by the portside longitudinal front spar 181, the portside longitudinal rear spar 182, the starboard side longitudinal front spar 185, the starboard side longitudinal rear spar 186, as well as respective upper and lower wing skins (310, 320 in Figure 3).

Illustratively, the wing box 220 is interrupted by the center wing section 210, i. e. by the fuselage 150. In other words, the center wing section 210 divides the wing box 220 of the forward-swept wing 160 into a wing box 221 in the portside wing section 161, and a wing box 222 in the starboard side wing section 164, both of which are hatched for purposes of illustration. As such, this division would lead to a main structural discontinuity in the center wing section 210, which is, however, avoided as the center wing spar 190 advantageously provides for main structural continuity between the portside wing section 161 and the starboard side wing section 164.

Figure 3 shows the portside wall 102 of the e-VTOL 100 of Figure 1 and Figure 2 with the fuselage 150 and the center wing section 210 of the forward-swept wing 160 according to Figure 2. Figure 3 is a simplified view which is intended to illustrate the center wing section 210 and the fuselage 150 in greater detail. Accordingly, various components of Figure 2, such as e. g. the thrust producing units assembly 140, the empennage 178, and so on are omitted for simplicity and clarity of the drawing.

As described above at Figure 1, the fuselage 150 comprises the cockpit compartment 153 in the front fuselage 152, and the cabin compartment 155 in the rear fuselage 154. Illustratively, the fuselage 150 further comprises, relative to vertical axis 130, an upper fuselage 157 and a lower fuselage 159. The upper fuselage 157 is closed by an upper fuselage loft 158.

As described above at Figure 1 and Figure 2, the forward-swept wing 160 is mounted in shoulder-wing configuration to the fuselage 150. Accordingly, the center wing section 210 with the center wing spar 190 of Figure 2 is located in the upper fuselage 157. The center wing spar 190 comprises a center spar web 336 with a lower cap 334 and an upper flange 332.

Illustratively, the forward-swept wing 160 further comprises an upper skin 310 and a lower skin 320. The lower skin 320 is interrupted by the fuselage 150 and connected to a respective fuselage outer shell. The upper skin 310 is preferably continued in the center wing section 210 as a center upper skin 315. In other words, the center upper skin 315 is preferably integrated into the upper skin 310. This center upper skin 315 may form the upper fuselage loft 158 in the center wing section 210.

According to one aspect, the center upper skin 315 is attached to the upper flange 332 of the center wing spar 190. the lower cap 334 of the center wing spar 190 is preferably formed as a massive component with concentrated mass and adapted to carry lower bending normal loads. The center spar web 336 of the center wing spar 190 is preferably attached to a main frame 350 of the fuselage 150.

The main frame 350 illustratively divides, i. e. segregates the fuselage 150 into the cockpit compartment 153 and the cabin compartment 155. Therefore, the main frame 350 preferably extends between the upper fuselage 157 and the lower fuselage 159.

According to one aspect, the fuselage 150 forms a wing root interface 340 at the portside wall 102. The wing root interface 340 may be connected to a portside root rib 360 of the portside wing section (161 in Figure 1 and Figure 2). The portside root rib 360, in turn, may form a rear spar root interface 370 for the portside longitudinal rear spar (182 in Figure 1 and Figure 2), and a front spar root interface 372 for the portside longitudinal rear spar (182 in Figure 1 and Figure 2). The portside root rib 360 may be integrated into the portside wall 102, i. e. form an integral part of the portside wall 102.

Figure 4 shows the forward-swept wing 160 of Figure 1 to Figure 3 seen from below. In other words, Figure 4 shows a lower side of the forward-swept wing 160 allowing a look onto the lower skin 320 of Figure 3.

As described above at Figure 1 and Figure 2, the forward-swept wing 160 comprises the portside wing section 161 with the wing root 162, the portside longitudinal front spar 181, the portside longitudinal rear spar 182, and the portside transversal rib 184, as well as the starboard side wing section 164 with the wing root 165, the starboard side longitudinal front spar 185, the starboard side longitudinal rear spar 186, and the starboard side transversal rib 188. However, the portside transversal rib 183 and the starboard side transversal rib 187 are omitted for simplicity of the drawing.

The portside wing section 161 may further incorporate the portside root rib 360 as a single part pre-assembled to the forward-swept wing 160. Illustratively, the forward-swept wing 160 further comprises the center wing spar 190 with the center spar web 336, the lower cap 334, and the upper flange 332. The upper flange 332 is attached to the center upper skin 315.

According to one aspect, the portside transversal rib 184 of the portside wing section 161 forms a portside intersection point 421 with the portside longitudinal rear spar 182, and the portside outer tip 195 of the center wing spar 190. Preferably, the portside transversal rib 184, the portside longitudinal rear spar 182 and the portside outer tip 195 of the center wing spar 190 are attached to each other at the portside intersection point 421.

Similarly, the starboard side transversal rib 188 of the starboard side wing section 164 illustratively forms a starboard side intersection point 423 with the starboard side longitudinal rear spar 186 and the starboard side outer tip 196 of the center wing spar 190. Preferably, the starboard side transversal rib 188, the starboard side longitudinal rear spar 186, and the starboard side outer tip 196 of the center wing spar 190 are attached to each other at the starboard side intersection point 423.

Furthermore, the portside longitudinal front spar 181 illustratively forms a portside intersection point 425 with the center wing spar 190 at the wing root 162 of the portside wing section 161. The portside longitudinal front spar 181 and the center wing spar 190 are preferably attached to each other at the portside intersection point 425. Moreover, the portside longitudinal front spar 181, the center wing spar 190, and the portside root rib 360 of the portside wing section 161 that is provided at the wing root 162 of the portside wing section 161 are preferably attached to each other and the fuselage 150 of Figure 1 to Figure 3. Alternatively, the portside root rib 360 may be an integral part of a respective continuous fuselage side shell of the fuselage 150.

Similarly, the starboard side longitudinal front spar 185 illustratively forms a starboard side intersection point 427 with the center wing spar 190 at the wing root 165 of the starboard side wing section 164. The starboard side longitudinal front spar 185 and the center wing spar 190 are preferably attached to each other at the starboard side intersection point 427. Moreover, the starboard side longitudinal front spar 185, the center wing spar 190, and a starboard side root rib 410 of the starboard side wing section 164 that is provided at the wing root 165 of the starboard side wing section 164 are preferably attached to each other and the fuselage 150 of Figure 1 to Figure 3. Alternatively, the starboard side root rib 410 may be an integral part of a respective continuous fuselage side shell of the fuselage 150.

### Reference List

- 100: Aircraft
- 102: Aircraft portside wall
- 104: Aircraft starboard side wall
- 110: Aircraft longitudinal axis resp. length direction
- 115: Aircraft forward flight direction
- 120: Aircraft lateral axis resp. width direction
- 130: Aircraft vertical axis resp. height direction
- 140: Thrust producing units assembly
- 141, 142, 143, 144: Thrust producing units
- 145: Lift rotor disc
- 150: Fuselage
- 152: Front fuselage
- 153: Cockpit compartment
- 154: Rear fuselage
- 155: Cabin compartment
- 157: Upper fuselage
- 158: Upper fuselage loft
- 159: Lower fuselage
- 160: Forward-swept wing
- 161: Portside wing section
- 162: Portside wing section wing root
- 163: Portside wing section wing tip
- 164: Starboard side wing section
- 165: Starboard side wing section wing root
- 166: Starboard side wing section wing tip
- 167: Wing leading edge
- 168: Wing trailing edge
- 169: Portside wing section quarter chord line
- 171: Portside pod
- 173: Portside boom
- 174: Starboard side pod
- 176: Starboard side boom
- 177: Horizontal rear plane
- 178: Empennage
- 181: Portside wing section front spar
- 182: Portside wing section rear spar
- 183, 184: Portside wing section transversal ribs
- 185: Starboard side wing section front spar
- 186: Starboard side wing section rear spar
- 187, 188: Starboard side wing section transversal ribs
- 190: Center wing spar
- 192: Center spar fuselage portion
- 193: Center spar portion on portside wing section
- 194: Center spar portion on starboard side wing section
- 195: Center spar tip in portside wing section
- 196: Center spar tip in starboard side wing section
- 210: Center wing section
- 220: Wing box
- 221: Wing box in portside wing section
- 222: Wing box in starboard side wing section
- 310: Upper wing skin
- 315: Center upper wing skin
- 320: Lower wing skin
- 332: Center spar upper flange
- 334: Center spar lower cap
- 336: Center spar web
- 340: Wing root interface
- 350: Front fuselage main frame
- 360: Portside wing section wing root rib
- 370: Portside wing section rear spar root interface
- 372: Portside wing section front spar root interface
- 410: Starboard side wing section wing root rib
- 421: Portside wing section rear spar intersection point
- 423: Starboard side wing section rear spar intersection point
- 425: Portside wing section front spar intersection point
- 427: Starboard side wing section front spar intersection point

- α: Sweep angle of the quarter chord line

## Claims

1. An aircraft (100) comprising a fuselage (150), and a forward-swept wing (160) in shoulder-wing configuration with a portside wing section (161) and a starboard side wing section (164), each one of the portside and starboard side wing sections (161, 164) comprising a wing root (162, 165) that is connected to the fuselage (150), and a wing tip (163, 166), wherein the portside wing section (161) comprises a portside longitudinal front spar (181) and a portside longitudinal rear spar (182) which extend from the wing root (162) of the portside wing section (161) to the wing tip (163) of the portside wing section (161), wherein the starboard side wing section (164) comprises a starboard side longitudinal front spar (185) and a starboard side longitudinal rear spar (186) which extend from the wing root (165) of the starboard side wing section (164) to the wing tip (166) of the starboard side wing section (164), **characterized in that** a center wing section (210) is formed in an upper portion (157) of the fuselage (150) and interconnects the portside wing section (161) and the starboard side wing section (164) of the forward-swept wing (160), wherein the center wing section (210) comprises a center wing spar (190) that is attached to the portside longitudinal front spar (181), the portside longitudinal rear spar (182), the starboard side longitudinal front spar (185), and the starboard side longitudinal rear spar (186), and wherein the center wing spar (190) comprises a center spar web (336) with a lower cap (334) and an upper flange (332).

2. The aircraft (100) of claim 1,
wherein the forward-swept wing (160) comprises a leading edge (167) and a trailing edge (168), wherein the portside longitudinal front spar (181) and the starboard side longitudinal front spar (185) are arranged close to the leading edge (167), and wherein the portside longitudinal rear spar (182) and the starboard side longitudinal rear spar (186) are arranged close to the trailing edge (168).

3. The aircraft (100) of claim 1 or 2,
wherein the center wing spar (190) comprises a portside outer tip (195) and a starboard side outer tip (196), wherein the portside outer tip (195) is attached to the portside longitudinal rear spar (182), and wherein the starboard side outer tip (196) is attached to the starboard side longitudinal rear spar (186).

4. The aircraft (100) of claim 3,
wherein the portside wing section (161) comprises at least one portside transversal rib (184) that forms a first portside intersection point (421) with the portside longitudinal rear spar (182) and the portside outer tip (195) of the center wing spar (190), and wherein the starboard side wing section (164) comprises at least one starboard side transversal rib (188) that forms a first starboard side intersection point (423) with the starboard side longitudinal rear spar (186) and the starboard side outer tip (196).

5. The aircraft (100) of claim 4,
wherein the at least one portside transversal rib (184), the portside longitudinal rear spar (182) and the portside outer tip (195) of the center wing spar (190) are attached to each other at the first portside intersection point (421), and wherein the at least one starboard side transversal rib (188), the starboard side longitudinal rear spar (186) and the starboard side outer tip (196) are attached to each other at the first starboard side intersection point (423).

6. The aircraft (100) of claim 4 or 5,
wherein the portside longitudinal front spar (181) forms a second portside intersection point (425) with the center wing spar (190) at the wing root (162) of the portside wing section (161), and wherein the starboard side longitudinal front spar (185) forms a second starboard side intersection point (427) with the center wing spar (190) at the wing root (165) of the starboard side wing section (164).

7. The aircraft (100) of claim 6,
wherein the portside longitudinal front spar (181) and the center wing spar (190) are attached to each other at the second portside intersection point (425), and wherein the starboard side longitudinal front spar (185) and the center wing spar (190) are attached to each other at the second starboard side intersection point (427).

8. The aircraft (100) of any one of claims 4 to 7,
wherein the at least one portside transversal rib (184) is oriented at least approximately perpendicular to one of the portside longitudinal rear spar (182) and/or the portside longitudinal front spar (181), and wherein the at least one starboard side transversal rib (188) is oriented at least approximately perpendicular to one of the starboard side longitudinal rear spar (186) and/or the starboard side longitudinal front spar (185).

9. The aircraft (100) of any one of the preceding claims,
wherein the center wing section (210) comprises a center upper skin (315) that is attached to the upper flange (332).

10. The aircraft (100) of claim 9,
wherein the forward-swept wing (160) comprises an upper skin (310) and a lower skin (320), wherein the center upper skin (315) is integrated into the upper skin (310) and forms an upper fuselage loft (158), and wherein the lower skin (320) is interrupted by the fuselage (150).

11. The aircraft (100) of any one of the preceding claims,
wherein the fuselage (150) comprises a main frame (350) that divides the fuselage (150) into a front compartment (153) and a rear compartment (155), and wherein the center spar web (336) is attached to the main frame (350).

12. The aircraft (100) of claim 11,
wherein the main frame (350) extends between the upper portion (157) of the fuselage (150) and a lower portion (159) of the fuselage (150).

13. The aircraft (100) of any one of the preceding claims,
wherein the lower cap (334) is formed as a massive component with concentrated mass and adapted to carry lower bending normal loads.

14. The aircraft (100) of any one of the preceding claims,
wherein the portside wing section (161) comprises a portside root rib (360) that is provided at the wing root (162) of the portside wing section (161) and attached to the portside longitudinal front spar (181), the center wing spar (190), and the fuselage (150), and wherein the starboard side wing section (164) comprises a starboard side root rib (410) that is provided at the wing root (165) of the starboard side wing section (164) and attached to the starboard side longitudinal front spar (185), the center wing spar (190), and the fuselage (150).

## Patentansprüche

1. Flugzeug (100), umfassend einen Rumpf (150) und einen nach vorne gepfeilten Flügel (160) in Schulterflügelkonfiguration mit einem backbordseitigen Flügelabschnitt (161) und einem steuerbordseitigen Flügelabschnitt (164), wobei jeder der backbordseitigen und steuerbordseitigen Flügelabschnitte (161, 164) eine Flügelwurzel (162, 165), die mit dem Rumpf (150) verbunden ist, und eine Flügelspitze (163, 166) umfasst, wobei der backbordseitige Flügelabschnitt (161) einen backbordseitigen vorderen Längsholm (181) und einen backbordseitigen hinteren Längsholm (182) umfasst, die sich von der Flügelwurzel (162) des backbordseitigen Flügelabschnitts (161) zu der Flügelspitze (163) des backbordseitigen Flügelabschnitts (161) erstrecken, wobei der steuerbordseitige Flügelabschnitt (164) einen steuerbordseitigen vorderen Längsholm (185) und einen steuerbordseitigen hinteren Längsholm (186) umfasst, die sich von der Flügelwurzel (165) des steuerbordseitigen Flügelabschnitts (164) zur Flügelspitze (166) des steuerbordseitigen Flügelabschnitts (164) erstrecken, **dadurch gekennzeichnet, dass** ein mittlerer Flügelabschnitt (210) in einem oberen Teil (157) des Rumpfes (150) ausgebildet ist und den backbordseitigen Flügelabschnitt (161) und den steuerbordseitigen Flügelabschnitt (164) des vorwärts gepfeilten Flügels (160) miteinander verbindet, wobei der mittlere Flügelabschnitt (210) einen mittleren Flügelholm (190) umfasst, der an dem backbordseitigen vorderen Längsholm (181), dem backbordseitigen hinteren Längsholm (182), dem steuerbordseitigen vorderen Längsholm (185) und dem steuerbordseitigen hinteren Längsholm (186) befestigt ist, und wobei der mittlere Flügelholm (190) einen mittleren Holmsteg (336) mit einer unteren Kappe (334) und einem oberen Flansch (332) umfasst.

2. Flugzeug (100) nach Anspruch 1,
bei dem der vorwärts gepfeilte Flügel (160) eine Vorderkante (167) und eine Hinterkante (168) umfasst, wobei der backbordseitige vordere Längsholm (181) und der steuerbordseitige vordere Längsholm (185) nahe der Vorderkante (167) angeordnet sind, und wobei der backbordseitige hintere Längsholm (182) und der steuerbordseitige hintere Längsholm (186) nahe der Hinterkante (168) angeordnet sind.

3. Flugzeug (100) nach Anspruch 1 oder 2,
bei dem der mittlere Flügelholm (190) eine backbordseitige Außenspitze (195) und eine steuerbordseitige Außenspitze (196) umfasst, wobei die backbordseitige Außenspitze (195) an dem backbordseitigen hinteren Längsholm (182) befestigt ist und wobei die steuerbordseitige Außenspitze (196) an dem steuerbordseitigen hinteren Längsholm (186) befestigt ist.

4. Flugzeug (100) nach Anspruch 3,
bei dem der backbordseitige Flügelabschnitt (161) mindestens eine backbordseitige Querrippe (184) umfasst, die einen ersten backbordseitigen Schnittpunkt (421) mit dem backbordseitigen hinteren Längsholm (182) und der backbordseitigen äußeren Spitze (195) des mittleren Flügelholms (190) bildet, und bei dem der steuerbordseitige Flügelabschnitt (164) mindestens eine steuerbordseitige Querrippe (188) umfasst, die einen ersten steuerbordseitigen Schnittpunkt (423) mit dem steuerbordseitigen hinteren Längsholm (186) und der steuerbordseitigen äußeren Spitze (196) bildet.

5. Flugzeug (100) nach Anspruch 4,
bei dem die mindestens eine backbordseitige Querrippe (184), der backbordseitige hintere Längsholm (182) und die backbordseitige äußere Spitze (195) des mittleren Flügelholms (190) an dem ersten backbordseitigen Schnittpunkt (421) aneinander befestigt sind, und bei dem die mindestens eine steuerbordseitige Querrippe (188), der steuerbordseitige hintere Längsholm (186) und die steuerbordseitige äußere Spitze (196) an dem ersten steuerbordseitigen Schnittpunkt (423) aneinander befestigt sind.

6. Flugzeug (100) nach Anspruch 4 oder 5,
bei dem der backbordseitige vordere Längsholm (181) einen zweiten backbordseitigen Schnittpunkt (425) mit dem mittleren Flügelholm (190) an der Flügelwurzel (162) des backbordseitigen Flügelabschnitts (161) bildet, und bei dem der steuerbordseitige vordere Längsholm (185) einen zweiten steuerbordseitigen Schnittpunkt (427) mit dem mittleren Flügelholm (190) an der Flügelwurzel (165) des steuerbordseitigen Flügelabschnitts (164) bildet.

7. Flugzeug (100) nach Anspruch 6,
bei dem der backbordseitige vordere Längsholm (181) und der mittlere Flügelholm (190) an dem zweiten backbordseitigen Schnittpunkt (425) aneinander befestigt sind, und bei dem der steuerbordseitige vordere Längsholm (185) und der mittlere Flügelholm (190) an dem zweiten steuerbordseitigen Schnittpunkt (427) aneinander befestigt sind.

8. Flugzeug (100) nach einem der Ansprüche 4 bis 7,
bei dem die mindestens eine backbordseitige Querrippe (184) zumindest annähernd senkrecht zu entweder dem backbordseitigen hinteren Längsholm (182) oder dem backbordseitigen vorderen Längsholm (181) ausgerichtet ist, und bei dem die mindestens eine steuerbordseitige Querrippe (188) zumindest annähernd senkrecht zu entweder dem steuerbordseitigen hinteren Längsholm (186) oder dem steuerbordseitigen vorderen Längsholm (185) ausgerichtet ist.

9. Flugzeug (100) nach einem der vorhergehenden Ansprüche,
bei dem der mittlere Flügelabschnitt (210) eine mittlere obere Beplankung (315) umfasst, die an dem oberen Flansch (332) befestigt ist.

10. Flugzeug (100) nach Anspruch 9,
bei dem der vorwärts gepfeilte Flügel (160) eine obere Beplankung (310) und eine untere Beplankung (320) umfasst, wobei die mittlere obere Beplankung (315) in die obere Beplankung (310) integriert ist und einen oberen Rumpfboden (158) bildet, und bei dem die untere Beplankung (320) durch den Rumpf (150) unterbrochen ist.

11. Flugzeug (100) nach einem der vorhergehenden Ansprüche,
bei dem der Rumpf (150) einen Hauptrahmen (350) umfasst, der den Rumpf (150) in ein vorderes Abteil (153) und ein hinteres Abteil (155) unterteilt, und bei dem der mittlere Holmsteg (336) an dem Hauptrahmen (350) befestigt ist.

12. Flugzeug (100) nach Anspruch 11,
bei dem sich der Hauptrahmen (350) zwischen dem oberen Teil (157) des Rumpfes (150) und einem unteren Teil (159) des Rumpfes (150) erstreckt.

13. Flugzeug (100) nach einem der vorhergehenden Ansprüche,
bei dem die untere Kappe (334) als massives Bauteil mit konzentrierter Masse ausgebildet und eingerichtet ist, um untere Biege-Normallasten aufzunehmen.

14. Flugzeug (100) nach einem der vorhergehenden Ansprüche,
bei dem der backbordseitige Flügelabschnitt (161) eine backbordseitige Wurzelrippe (360) umfasst, die an der Flügelwurzel (162) des backbordseitigen Flügelabschnitts (161) vorgesehen und an dem backbordseitigen vorderen Längsholm (181), dem mittleren Flügelholm (190) und dem Rumpf (150) befestigt ist, und bei dem der steuerbordseitige Flügelabschnitt (164) eine steuerbordseitige Wurzelrippe (410) umfasst, die an der Flügelwurzel (165) des steuerbordseitigen Flügelabschnitts (164) vorgesehen ist und an dem steuerbordseitigen vorderen Längsholm (185), dem mittleren Flügelholm (190) und dem Rumpf (150) befestigt ist.

## Revendications

1. Aéronef (100) comprenant un fuselage (150), et une aile (160) en flèche inversée dans une configuration à ailes hautes avec une partie d'aile côté bâbord (161) et une partie d'aile côté tribord (164), chacune des parties d'aile côtés bâbord et tribord (161,164) comprenant une emplanture d'aile (162, 165) qui est raccordée au fuselage (150), et un saumon d'aile (163, 166), dans lequel la partie d'aile côté bâbord (161) comprend un longeron avant (181) longitudinal côté bâbord et un longeron arrière (182) longitudinal côté bâbord qui s'étendent depuis l'emplanture d'aile (162) de la partie d'aile côté bâbord (161) jusqu'au saumon d'aile (163) de la partie d'aile côté bâbord (161), dans lequel la partie d'aile côté tribord (164) comprend un longeron avant (185) longitudinal côté tribord et un longeron arrière (186) longitudinal côté tribord qui s'étendent depuis l'emplanture d'aile (165) de la partie d'aile côté tribord (164) jusqu'au saumon d'aile (166) de la partie d'aile côté tribord (164), **caractérisé en ce qu'**une partie d'aile centrale (210) est formée dans une partie supérieure (157) du fuselage (150) et raccorde entre elles la partie d'aile côté bâbord (161) et la partie d'aile côté tribord (164) de l'aile (160) en flèche inversée, dans lequel la partie d'aile centrale (210) comprend un longeron d'aile central (190) qui est fixé au longeron avant (181) longitudinal côté bâbord, au longeron arrière (182) longitudinal côté bâbord, au longeron avant (185) longitudinal côté tribord, au longeron arrière (186) longitudinal côté tribord, et dans lequel le longeron d'aile central (190) comprend une âme (336) de longeron central avec une semelle inférieure (334) et une bride supérieure (332).

2. Aéronef (100) selon la revendication 1,
dans lequel l'aile (160) en flèche inversée comprend un bord d'attaque (167) et un bord de fuite (168), dans lequel le longeron avant (181) longitudinal côté bâbord et le longeron avant (185) longitudinal côté tribord sont aménagés à proximité du bord d'attaque (167), et dans lequel le longeron arrière (182) longitudinal côté bâbord et le longeron arrière (186) longitudinal côté tribord sont aménagés à proximité du bord de fuite (168).

3. Aéronef (100) selon la revendication 1 ou 2,
dans lequel le longeron d'aile central (190) comprend une extrémité externe (195) côté bâbord et une extrémité externe (196) côté tribord, dans lequel l'extrémité externe (195) côté bâbord est fixée au longeron arrière (182) longitudinal côté bâbord, et dans lequel l'extrémité externe (196) côté tribord est fixée au longeron arrière (186) longitudinal côté tribord.

4. Aéronef (100) selon la revendication 3, dans lequel la partie d'aile côté bâbord (161) comprend au moins une nervure transversale (184) côté bâbord qui forme un premier point d'intersection (421) côté bâbord avec le longeron arrière (182) longitudinal côté bâbord et l'extrémité externe (195) côté bâbord du longeron d'aile central (190), et dans lequel la partie d'aile côté tribord (164) comprend au moins une nervure transversale (188) qui forme un premier point d'intersection (423) côté tribord avec le longeron arrière (186) longitudinal côté tribord et l'extrémité externe (196) côté tribord.

5. Aéronef (100) selon la revendication 4,
dans lequel ladite au moins une nervure transversale (184) côté bâbord, le longeron arrière (182) longitudinal côté bâbord et l'extrémité externe (195) côté bâbord du longeron d'aile central (190) sont fixés les uns aux autres à l'emplacement du premier point d'intersection (421) côté bâbord, et dans lequel ladite au moins une nervure transversale (188) côté tribord, le longeron arrière (186) longitudinal côté tribord et l'extrémité externe (196) côté tribord sont fixés les uns aux autres à l'emplacement du premier point d'intersection (423) côté tribord.

6. Aéronef (100) selon la revendication 4 ou 5,
dans lequel le longeron avant (181) longitudinal côté bâbord forme un second point d'intersection (425) côté bâbord avec le longeron d'aile central (190) à l'emplanture (162) de l'aile de la partie d'aile côté bâbord (161), et dans lequel le longeron avant (185) longitudinal côté tribord forme un second point d'intersection (427) côté tribord avec le longeron central (190) à l'emplanture (165) de l'aile de la partie d'aile côté tribord (164).

7. Aéronef (100) selon la revendication 6,
dans lequel le longeron avant (181) longitudinal côté bâbord et le longeron d'aile central (190) sont fixés l'un à l'autre au second point d'intersection (425) côté bâbord, et dans lequel le longeron avant (185) longitudinal côté tribord et le longeron central (190) sont fixés l'un à l'autre au second point d'intersection (427) côte tribord.

8. Aéronef (100) selon l'une quelconque des revendications 4 à 7,
dans lequel ladite au moins une nervure transversale (184) côté bâbord est orientée au moins approximativement de façon perpendiculaire à l'un parmi le longeron arrière (182) longitudinal côté bâbord et/ou le longeron avant (181) longitudinal côté bâbord, et dans lequel ladite au moins une nervure transversale (188) est orientée au moins approximativement de façon perpendiculaire à l'un parmi le longeron arrière (186) longitudinal côté tribord et/ou le longeron avant (185) longitudinal côte tribord.

9. Aéronef (100) selon l'une quelconque des revendications précédentes,
dans lequel la partie d'aile centrale (210) comprend un revêtement supérieur central (315) qui est fixé à la bride (332) supérieure.

10. Aéronef (100) selon la revendication 9,
dans lequel l'aile (160) en flèche inversée comprend un revêtement supérieur (310) et un revêtement inférieur (320), dans lequel le revêtement supérieur central (315) est intégré au revêtement supérieur (310) et forme un carénage (158) de fuselage supérieur, et dans lequel le revêtement inférieur (320) est interrompu par le fuselage (150).

11. Aéronef (100) selon l'une quelconque des revendications précédentes,
dans lequel le fuselage (150) comprend un cadre principal (350) qui sépare le fuselage (150) en un compartiment avant (153) et un compartiment arrière (155), et dans lequel l'âme (336) de longeron central est fixée au cadre principal (350).

12. Aéronef (100) selon la revendication 11,
dans lequel le cadre principal (350) s'étend entre la partie supérieure (157) du fuselage (150) et une partie inférieure (159) du fuselage (150).

13. Aéronef (100) selon l'une quelconque des revendications précédentes,
dans lequel la semelle (334) inférieure est sous forme de composant massif avec une masse concentrée et est apte à supporter des efforts normaux de flexion exercés sur la partie inférieure.

14. Aéronef (100) selon l'une quelconque des revendications précédentes,
dans lequel la partie d'aile côté bâbord (161) comprend une nervure (360) d'emplanture côté bâbord qui est prévue à l'emplanture d'aile (162) de la partie d'aile côté bâbord (161) et fixée au longeron avant (181) longitudinal côté bâbord, au longeron d'aile central (190), et au fuselage (150), et dans lequel la partie d'aile côté tribord (164) comprend une nervure (410) d'emplanture côté tribord qui est prévue à l'emplanture d'aile (165) de la partie d'aile côté tribord (164) et fixée au longeron avant (185) longitudinal côté tribord, au longeron d'aile central (190), et au fuselage (150).
